# EUROPEAN PATENT SPECIFICATION

(11) **EP 1 124 743 B1**
(45) Date of publication and mention of the grant of the patent: **11.08.2004**
(21) Application number: 99948109.6
(22) Date of filing: 02.09.1999
(51) Int. Cl.: B65G 15/34

(54) **BELT HAVING ANTIMICROBIAL ACTION**
BAND MIT ANTIMIKROBIELLER WIRKUNG
COURROIE PRESENTANT UN EFFET ANTIMICROBIEN

(30) Priority: 03.09.1998 US 146877
(43) Date of publication of application: 22.08.2001
(73) Proprietor: AgION Technologies, Inc., Wakefield, MA 01880 (US)
(72) Inventor: BARRY, John, E., Derry, NH 03038 (US); TROGOLO, Jeffrey, A., Boston, MA 02116 (US); PASTECKI, Elizabeth, A., Watertown, MA 02172 (US)
(74) Representative: Wibbelmann, Jobst, Dr., Dipl.-Chem.
(86) International application number: PCT/US1999/020188
(87) International publication number: WO 2000/013992

(56) References cited:
- WO-A-96/22239
- NL-C- 1 009 742
- US-A- 4 911 898
- DATABASE WPI Section Ch, Week 199301 Derwent Publications Ltd., London, GB; Class A60, AN 1993-004987 XP002126916 & JP 04 333405 A (YOKOHAMA RUBBER CO LTD), 20 November 1992 (1992-11-20)
- DATABASE WPI Section Ch, Week 199640 Derwent Publications Ltd., London, GB; Class A88, AN 1996-396699 XP002126917 & JP 08 192473 A (YOKOHAMA RUBBER CO LTD), 30 July 1996 (1996-07-30)
- PATENT ABSTRACTS OF JAPAN vol. 1999, no. 04, 30 April 1999 (1999-04-30) & JP 11 021378 A (OTSUKA CHEM CO LTD), 26 January 1999 (1999-01-26)

## Description

### Field of the invention

The invention relates to belts, or belting, having antimicrobial action.

### Background of the Invention

The use of various types of belts, or belting, for transporting articles is well-known. One typical use is in the conveying of food products, for example, in a supermarket. A potential problem arises in the creation of an unsanitary condition. For example, consider that liquid drips from a package of meat. While the liquid may be wiped off, or dry of its own accord, the residue serves as a breeding ground for bacteria. Therefore, it is desired that the belt have antimicrobial action to kill the bacteria so that products later deposited on the belt do not become contaminated with the bacteria.

U.S. Patent 5,586,643, discloses a belt of the modular type in which metal links are separated by sections of an elastomeric material which are impregnated with an antimicrobial agent. The agent is applied topically to an exposed surface or by incorporating it into the elastomeric material. The antimicrobial agent is selected from the group consisting of a chlorinated phenoxy and polyhexamethylene biguanide. The antimicrobial agent incorporated into the polymeric material exhibits controlled migration through the material to the exposed surface thereof when an imbalance of vapor pressure of the antimicrobial agent demands equalization to continuously inhibit bacterial growth and promote asepsis on the belting.

U.S. Patent 5,495,935 discloses a woven fiber belt that is covered by an elastomeric material. An antibacterial agent is incorporated Into the elastomeric material to inhibit bacterial growth. The agent is put into powder form and mixed with the thermoplastic cover material and is a biocidal or biostatic substance. The microbial agents will migrate through the polymer surface until equilibrium of the antimicrobial agent internal vapor pressure is reached. The antibacterial agent are the same as, or similar to, those disclosed in U.S. Patent 5,586,643.

Antimicrobial agents of the type disclosed in the aforesaid patents are of organic composition. Thus, they have a number of disadvantages in the betting application. For example, such organic agents are not always thermally stable and also are only efficacious over a relatively short term. Further, they raise issues relating to skin sensitivity and the creation of resistant strains of bacteria, such as has been found relating to Triclosan. In addition, organic agents are often volatile and degrade into unwanted by products, such as Dioxin, which are potentially harmful to humans.

JP-A-4333405 discloses a belt used for bacteria free transfer of foods, the belt including a surface layer comprising outer and inner layers, wherein the outer layer contains heavy metal ion-loaded zeolite particles.

### Brief Description of the Invention

The present invention relates to belting having an inorganic antimicrobial agent as recited in claim 1. In a preferred embodiment of the invention, the belting comprises one or more web layers of either woven or non-woven fibers of a natural or man made material. The fibers are saturated with polymeric (thermoplastic) material, such as polyvinyl chloride or polyurethane in a bath in which the polymeric contains an inorganic antimicrobial agent. The agent can be one or more of inorganic materials of a metal or a salt having antimicrobial properties. In another embodiment, the polymeric coating on the fibers is itself coated with the inorganic agent.

In one embodiment, the web layer, or layers, can be cover coated with a contiguous layer of a polymeric, such as polyvinyl chloride or polyurethane. The material of the contiguous polymeric layer also can have the inorganic antimicrobial agent added or the contiguous layer can be coated with the inorganic antimicrobial agent.

The use of the inorganic antimicrobial agents overcomes a number of the deficiencies of organic agents used with belting and have advantages. The inorganic agents are more thermally stable and maintain their efficacy over a relatively long period of time. Also, they have relatively few problems relating to skin sensitivity and do not have the problem of creating resistant strains of bacteria. In addition, the inorganic agents are not volatile and do not degrade into unwanted byproducts.

### Objects of the Invention

It is therefore an object of the present invention to provide belting having antimicrobial properties.

A further object is to provide lightweight belting incorporating inorganic antimicrobial agents.

Yet another object is to provide belting made of fibers of polymeric material which are impregnated or coated with an inorganic antimicrobial agent to form a web for the belting which in provided with a contiguous layer of a polymer material which also is impregnated or coated with an antimicrobial agent.

### Brief Description of the Drawings

Other objects and advantages of the present invention will become more apparent upon reference to the following specification and annexed drawings in which:

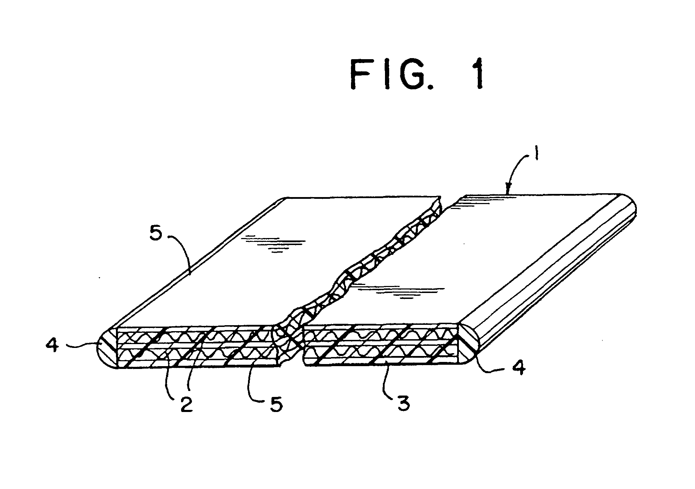

Fig. 1 is a cross-sectional view of a belting made in accordance with the invention.

### Detailed Description of the Invention

Referring to Fig. 1, a belt or belting 1 is shown as having two layers 2 of a support web 2. Each web layer is formed of woven or non-woven fibers of natural or man made flexible fibers such as, for example, cotton, polyester, polyethylene, nylon, fiberglass, polypropylene bacetates and other materials suitable for belting use. The fibers of each web layer are saturated with a polymeric material such as, for example polyethylene, polypropylene and preferably polyvinyl chloride, a PVC plastisol, polyurethane or polyblend of the latter two. Other flexible materials can be used, such as, silicone rubber, latex rubber and other flexible polymers. When the fibers of the web layer material are so saturated, the resultant product is a substantially continuous solid member, for example, like a place mat.

The belting of the invention can be formed by a single web layer made as described. Two or more webs 2 can be used. The belting 1 is completed by joining the saturated fabric web layers 2 together by a suitable adhesive or by fastening them by any suitable thermal process. The fibers of the two web layers 2 can be cross-laid to increase the belting overall strength. While two of the web layers 2 are shown, it should be understood that there can be only a single layer or more than two layers. The belting 1 is to be driven in a conventional manner as part of a conveyor type system.

To further increase the strength and durability of the belting, a contiguous layer, or cover coat, 3, can be provided. The contiguous cover coat layer 3 fully impregnates through and joins the layers 2 together. It also forms smooth upper and lower surfaces 5 for the belting. The cover coat 3 also is a flexible polymeric material such as of the types used to saturate the web fabric fibers and is applied by any suitable process, such as calendering, rolling or extruding.

If desired, a profile material in the form of a half-round cord 4 can be placed on each edge of the belting to provide edge protection. The cord 4 can also be of a suitable thermoplastic material that can be fastened to the edges of the belting. An arrangement of this type is shown in U.S. Patent 5,316,132.

In a preferred embodiment of the manufacture of the web that forms each of the belting web layers 2, the mixture of the thermoplastic material for coating (saturating) the fibers also contains the inorganic antimicrobial agent. The fibers are saturated in the mixture either while in bulk form or after having been formed into the web. The inorganic antimicrobial agent comprises approximately 0.5-20.0 wt% of the mixture, more preferably 0.5-10.0 wt% and most preferably 1.0-8.0 wt%. The web with saturated fibers is then cured, such as by drying in a heated environment.

Instead of incorporating the antimicrobial agent into the mixture that saturates the web fibers, the fibers can be coated with the inorganic antimicrobial agent after being saturated with the polymeric material and either before or after the polymeric material has been cured. The fibers can be coated with the agent either in bulk form or after they have been formed into the web. Various methods for applying the agent to the web fibers include:
a. spraying the inorganic antimicrobial agent in particle form directly onto the web. This is preferably done before the polymeric material saturating the fibers has been cured so that the particles will adhere to the web.
b. spray coat the web layer with an adhesive binder, such as silicone, acrylic or polyurethane, in which particles of the agent are incorporated. Here, the preferred range of concentration of the inorganic agent is between 0.5 and 30.0 wt%, more preferably between 0.5 and 20.0 wt%, and most preferably between 1.0 and 10.0 wt%.
c. pass the fibers either in bulk or after being formed into the web through a bath containing the inorganic agent. This also preferably is done before the polymeric material saturating the fibers has cured. The concentration of the inorganic agent would be the same as in b.

The cover coat layer 3 is also of a flexible polymeric thermoplastic material. The thermoplastic material can have the inorganic antimicrobial agent incorporated into it in the same manner as applied to the fibers of the belting layers 2. The agent can comprise 0.5-30.0 wt% of the mixture, more preferably 0.5-20.0 wt% and most preferably 1.0-15.0 wt%.

As an alternative to the inorganic antimicrobial agent being incorporated in the mixture forming the cover coat, it can be topically applied to the cover coat 3 after the cover coat is placed on the belting layers 2. The former is preferred since this better disperses the antimicrobial agent throughout the entirety of the belting. Topical application of the cover coat with the inorganic agent can be as in the above methods a., b. and c. above with the agent having the same concentration.

The half-round cords 4 also can be formed with or have the agent applied to it.

After saturation of the fibers and/or cover coating of the situated fabric, the belt is thermally cured. The thermal process occurs at between 30 and 500°C, preferably between 50 and 400°C, and most preferably between 100 to 300°C. The inorganic antimicrobial content in the fiber saturation and cover coating is between 0.1 and 40%, preferably between 0.5 and 30% and most preferably between 1.0 and 20.0% by weight of the saturation and cover coat (not including the weight of the fabric) material.

The finished belting product has the outward appearance of conventional belting. It is flexible and can be used with conventional conveyor apparatus. Where the cover coat is used, the surface is relatively smooth. The particles of the inorganic agent release their antimicrobial action, as explained below, and are long lasting.

As to the inorganic antimicrobial agent, a number of metal ions, which are inorganic materials, have been shown to possess antibiotic activity, including silver, copper, zinc, mercury, tin, lead, bismuth, cadmium, chromium and thallium ions. These antibiotic metal ions are believed to exert their effects by disrupting respiration and electron transport systems upon absorption into bacterial or fungal cells. Antimicrobial metal ions of silver, gold, copper and zinc, In particular, are considered safe even for *in vivo* use. Antimicrobial silver ions are particularly useful for *in vivo* use due to the fact that they are not substantially absorbed into the body. That is, if such materials are used for the antimicrobial belting, they should pose no hazard.

Antibiotic zeolites also are suitable. These have been prepared by replacing part of the ion exchangeable zeolites in an amount below the ion-exchange saturation capacity of the zeolites with ammonium ions and antibiotic metal ions, as described in U. S. Patent Nos: 4,938,958 and 4,911,898. Such zeolites have been incorporated in antibiotic resins (as shown in U. S. Patents Nos. 4,938,955 and 4,906,164) and polymer articles (U. S. Patent No. 4,775,585). Polymers including the antibiotic zeolites have been used to make refrigerators, dish washers, rice cookers, plastic film, chopping boards, vacuum bottles, plastic palls, and garbage containers. Other materials in which antibiotic zeolites have been incorporated include flooring, wall paper, cloth, paint, napkins, plastic automobile parts, catheters, bicycles, pens, toys, sand, and concrete. Examples of such uses are described in US Patents 5,714,445; 5,697,203; 5,682,872; 5,180,585; 5,714,430; and 5,102,401. These applications involve slow release of antibiotic silver from the zeolite particles which is suitable for the belting disclosed.

In a preferred embodiment of the invention, the inorganic antibiotic metal containing composition is an antibiotic metal salt. Such salts include silver acetate, silver benzoate, silver carbonate, silver iodate, silver iodide, silver lactate, silver laurate, silver nitrate, silver oxide, silver palmitate, silver protein, and silver sulfadiazine. Silver nitrate is preferred. These salts are particularly quick acting, as no release from ceramic particles is necessary to function antimicrobially.

Antibiotic ceramic particles useful with the present invention include, zeolites, hydroxyapatite, zirconium phosphates of other ion-exchange ceramics as recited in claim 1. Zeolites are preffered, and are describes in the preferred embodiments referred to below. Hydroxyapatite particles containing antimicrobial metals are described, e.g., in U.S. Patent No. 5,009,898. Zirconium phosphates containing antimicrobial metals are described, e.g., in U. S. Patent Nos. 5,296,238; 5,441,717; and 5,405,644.

Antibiotic zeolites are well known and can be prepared for use in the present invention using known methods. These include the antibiotic zeolites disclosed, for example, in U.S. Patent Nos. 4,938,958 and 4,911,898.

Either natural zeolites or synthetic zeolites can be used to make the antibiotic zeolites used in the present invention. "Zeolite" is an aluminosilicate having a three dimensional skeletal structure that is represented by the formula: XM₂/nO-Al₂O₃-YSiO₂-ZH₂O. M represents an ion-exchangeable ion, generally a monovalent or divalent metal ion, n represents the atomic valency of the (metal) ion, X and Y represent coefficients of metal oxide and silica respectively, and Z represents the number of water of crystallization. Examples of such zeolites include A-type zeolites, X-type zeolites, Y-type zeolites, T-type zeolites, high-silica zeolites, sodalite, mordenite, analcite, clinoptilolite, chabazite and erionite. The present invention is not restricted to use of these specific zeolites.

The ion-exchange capacities of these zeolites are as follows: A-type zeolite = 7 meq/g; X-type zeolite = 6.4 meq/g; Y-type zeolite = 5 meq/g; T-type zeolite = 3.4 meq/g; sodalite = 11.5 meq/g; mordenite = 2.6 meq/g; analcite = 5 meq/g; clinoptilolite = 2.6 meq/g; chabazite = 5 meq/g; and erionite = 3.8 meq/g. These ion-exchange capacities are sufficient for the zeolites to undergo ion-exchange with ammonium and antibiotic metal ions.

The specific surface area of preferred zeolite particles is preferably at least 150 m² /g (anhydrous zeolite as standard) and the SiO₂/Al₂O₃ mol ratio in the zeolite composition is preferably less than 14, more preferably less than 11.

The antibiotic metal ions used in the antibiotic zeolites should be retained on the zeolite particles through an ion-exchange reaction. Antibiotic metal ions which are adsorbed or attached without an ion-exchange reaction exhibit a decreased bacteriocidal effect and their antibiotic effect is not long-lasting. Nevertheless, it is advantageous for imparting quick antimicrobial action to maintain a sufficient amount of surface adsorbed metal ion.

In the ion-exchange process, the antibiotic metal ions tend to be converted into their oxides, hydroxides, basic salts etc. either in the micropores or on the surfaces of the zeolite and also tend to deposit there, particularly when the concentration of metal ions in the vicinity of the zeolite surface is high. Such deposition tends to adversely affect the bactericidal properties of ion-exchanged zeolite.

According to the invention, a relatively low degree of ion exchange is employed to obtain superior bactericidal properties of the antibiotic zeolites. It is believed to be required that at least a portion of the zeolite particles retain metal ions having bactericidal properties at ion-exchangeable sites of the zeolite in an amount less than the ion-exchange saturation capacity of the zeolite. In one embodiment, the zeolite employed in the present invention retains antimicrobial metal ions in an amount up to 41 % of the theoretical ion-exchange capacity of the zeolite. Such ion-exchanged zeolite with a relatively low degree of ion-exchange may be prepared by performing ion-exchange using a metal ion solution having a low concentration as compared with solutions conventionally used for ion exchange.

The antibiotic metal ion is preferably present in the range of from about 0.1 to 20.0wt.% of the zeolite. In one embodiment, the zeolite contain from 0.1 to 20.0wt.% of silver ions and from 0.1 to 20.0wt.% of copper or zinc ions. Although ammonium ion can be contained in the zeolite at a concentration of about 20 wt.% or less of the zeolite, it is desirable to limit the content of ammonium ions to from 0.5 to 15.0 wt.%, preferably 1.5 to 5.0 wt.%. Weight% described herein is determined for materials dried at temperatures such as 110°C, 250°C or 550°C as this is the temperature employed for the preferred post-manufacturing drying process.

A preferred antibiotic zeolite is type A zeolite containing either a combination of ion-exchanged silver, zinc, and ammonium or silver and ammonium. One such zeolite is manufactured by Shinagawa, Inc. under the product number AW-10N and consists of 0.6% by weight of silver ion-exchanged in Type A zeolite particles having a diameter of about 2.5µ. Another formulation, AJ-10N, consists of about 2% by weight silver ion-exchanged in Type A zeolite particles having a diameter of about 2.5µ. Another formulation, AW-80, contains 0.6% by weight of silver ion-exchanged in Type A zeolite particles having a diameter of about 1.0µ. Another formulation, AJ-80N, consists of about 2% by weight silver ion-exchanged in Type A zeolite particles having a diameter of about 1.0µ. These zeolites preferably contain about between 0.5% and 2.5% by weight of ion-exchanged ammonium.

The zeolites are often obtained in master batches of low density polyethylene, polypropylene, or polystyrene, containing 20 wt.% of the zeolite. Thus, they can be easily mixed with the thermoplastic materials forming the web 2 and the cover coat 3.

The antibiotic particles are preferably present in a concentration by weight in the web fabric and cover coat material of from 0.01 to 10.0 wt%, more preferably from 0.01 to 8.0 wt%, and most preferably from 0.1 to 5.0 wt%.

The antibiotic properties of the antibiotic zeolite particles of the invention may be assayed while in aqueous formulations using conventional assay techniques, including for example determining the minimum growth inhibitory concentration (MIC) with respect to a variety of bacteria, eumycetes and yeast. In such a test, the bacteria listed below may be employed:
*Bacillus cereus var mycoides,*
*Escherichia coli,*
*Pseudomonas aeruginosa,*
*Staphylococcus aureus,*
*Streptococcus faecalis,*
*Aspergillus niger,*
*Aureobasiduim pullulans,*
*Chaetomium globosum,*
*Gliocladium virens,*
*Penicillum funiculosum,*
*Candida albicans,* and
*Saccharomyces cerevisiae.*

The assay for determining MIC can be carried out by smearing a solution containing bacteria for inoculation onto a plate culture medium to which a test sample of the encapsulated antibiotic zeolite particles is added in a particular concentration, followed by incubation and culturing of the plate. The MIC is defined as a minimum concentration thereof required for inhibiting the growth of each bacteria.

Safety and biocompatibility tests were conducted on the antibiotic zeolites employed in the invention. ISO 10993-1 procedures were employed. The following results were obtained:

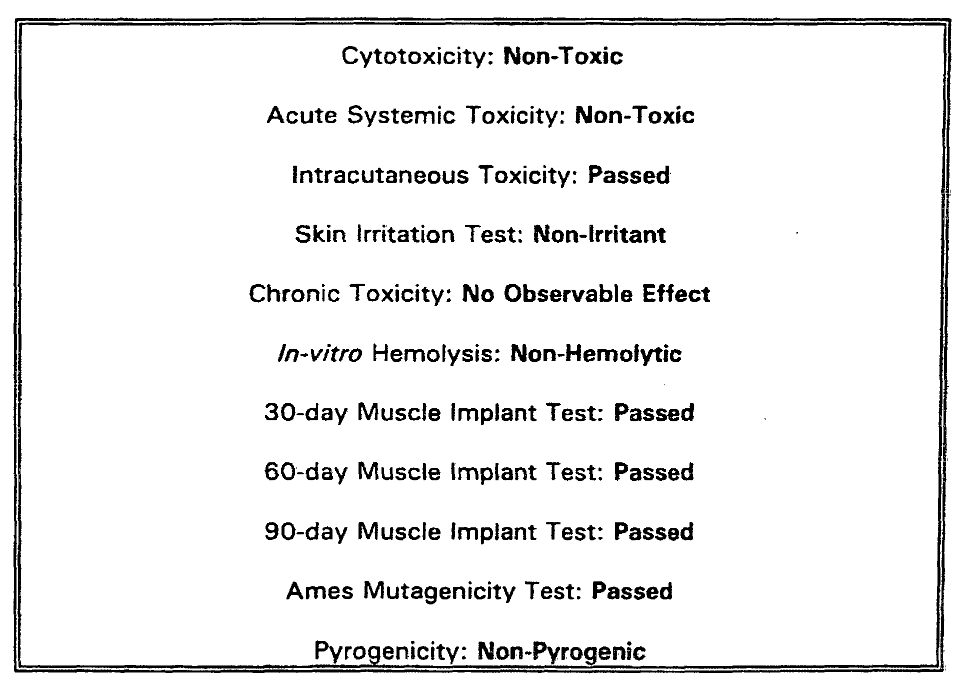

Thus, the antibiotic zeolites are exceptionally suitable under relevant toxicity and biocompatibility standards for use in the belting.

Various examples are given for making the belting.

The preferred embodiment involves taking the fiber materials and dipping them through a polymer bath of PVC into which 5% of an antimicrobial zeolite has been added. The polymer is then cured using standard curing techniques appropriate for the material. The coated fibers are then cover coated with an additional layer of polymer, again PVC into which 10% of the antimicrobial has been added and dispersed. The polymer is then cured using standard curing techniques appropriate for the material. The resulting roll of coated fibers is then cut to fit the required belting. Various finishing steps to bind the roll into a true roll and to cut to fit the conveyor are then done.

A second example involves taking the fiber materials and dipping them through a polymer bath of PVC into which 1% of the antimicrobial zeolite has been added. The polymer is then cured using standard curing techniques appropriate for the material. The coated fibers are then cover coated with an additional layer of polymer, again PVC, into which 2% of the antimicrobial has been added and dispersed. The polymer is then cured using standard curing techniques appropriate for the material. The resulting roll of coated fibers is then cut to fit the required belting. Various finishing steps to bind the roll into a true roll and to cut to fit the conveyor are then done.

A third example involves taking the fiber materials and dipping them through a polymer bath of polyurethane into which 5% of the antimicrobial zeolite has been added. The polymer is then cured using standard curing techniques appropriate for the material. The coated fibers are then cover coated with an additional layer of polymer, again polyurethane, into which 10% of the antimicrobial agent has been added and dispersed. The polymer is then cured using standard curing techniques appropriate for the material. The resulting roll of coated fibers is then cut to fit the required belting. Various finishing steps to bind the roll into a true roll and to cut to fit the conveyor are then done.

A fourth example involves taking the fiber materials and dipping them through a polymer bath of polyurethane into which 1% of the antimicrobial zeolite has been added. The polymer is then cured using standard curing techniques appropriate for the material. The coated fibers are then cover coated with an additional layer of polymer, again polyurethane into which 2% of the antimicrobial agent has been added and dispersed. The polymer is then cured using standard curing techniques appropriate for the material. The resulting roll of coated fibers is then cut to fit the required belting. Various finishing steps to bind the roll into a true roll and to cut to fit the conveyor are then done.

The fifth example involves taking the fiber materials and dipping them through a polymer bath of polyurethane into which 5% of the antimicrobial zeolite has been added. The polymer is then cured using standard curing techniques appropriate for the material. The resulting roll of coated fibers is then cut to fit the required belting. Various finishing steps to bind the roll into a true roll and to cut to fit the conveyor are then done.

A sixth example involves taking the fiber materials and dipping them through a polymer bath of polyurethane into which 1% of the antimicrobial zeolite has been added. The polymer is then cured using standard curing techniques appropriate for the material. The resulting roll of coated fibers is then cut to fit the required belting. Various finishing steps to bind the roll into a true roll and to cut to fit the conveyor are then done.

A seventh example involves taking the fiber materials and dipping them through a polymer bath of polyurethane into which 5% of the antimicrobial zeolite has been added. The polymer is then cured using standard curing techniques appropriate for the material. The resulting roll of coated fibers is then cut to fit the required belting. Various finishing steps to bind the roll into a true roll and to cut to fit the conveyor are then done.

An eighth example involves taking the fiber materials and dipping them through a polymer bath of polyurethane into which 1% of the antimicrobial zeolite has been added. The polymer is then cured using standard curing techniques appropriate for the material. The resulting roll of coated fibers is then cut to fit the required belting. Various finishing steps to bind the roll into a true roll and to cut to fit the conveyor are then done.

Specific features of the invention are shown in one or more of the drawings for convenience only, as each feature may be combined with other features in accordance with the invention. Alternative embodiments will be recognized by those skilled in the art and are intended to be included within the scope of the claims.

## Claims

1. A flexible belting containing an inorganic antimicrobial agent
comprising at least one agent selected from the group consisting of antimicrobial ceramic particles and antimicrobial metal salts; **characterized in that**
said antimicrobial ceramic particles include at least one particle species selected from the group consisting of zeolites containing ion-exchanged antimicrobial metal ions in an amount below the ion-exchange saturation capacity of the zeolite, hydroxyapatite, zirconium phosphates and other ion-exchange ceramics.

2. A belting as in claim 1 comprising a web layer of a fabric with the web layer containing said inorganic antimicrobial agent.

3. A belting as in claim 2 wherein the fabric of the web is saturated with a polymeric material and said polymeric material contains said agent.

4. A belting as in claim 3 wherein said agent is mixed in the polymeric material that saturates the web fabric.

5. A belting as in claim 3 wherein said agent is coated onto said polymeric material.

6. A belting as in claim 2 wherein the fabric is selected from the group consisting of cotton, polyester, nylon, fiberglass, polypropylene, and polyvinyl chloride.

7. A belting as in claim 3 wherein said polymeric material is selected from the group consisting of polyurethane, polyvinyl chloride, silicone rubber, latex rubber and other flexible polymers.

8. A belting as in claim 7 wherein the fabric of said web is selected from the group consisting of cotton, polyester, nylon, fiberglass, polypropylene, and polyvinyl chloride.

9. A belting as in claim 2 further comprising a layer of an elastomeric material contiguous with and cover coating said web layer.

10. A belting as in claim 9 wherein said cover coating layer contains an inorganic antimicrobial agent.

11. A belting as in claim 10 wherein said agent is mixed in the elastomeric cover coating material.

12. A belting as in claim 10 wherein said agent is coated onto said elastomeric cover coating material.

13. A belting as in claim 4 wherein the material of said agent comprises approximately 0.5-20.0wt% of the mixture of said polymeric material and said agent.

14. A belting as in claim 13 wherein said agent is 0.5-10.0wt% of the mixture.

15. A belting as in claim 14 wherein said agent is 1.0-8.0wt% of the mixture.

16. A belting as in claim 1 wherein said agent comprises a zeolite containing ion-exchanged antimicrobial metal ions in an amount not exceeding 41% of the ion-exchange saturation capacity of the zeolite.

17. The belting as in claim 16 wherein said zeolite contains ammonium ion in an amount not exceeding 20% by weight, based on the weight of the zeolite.

18. The belting of claim 1 wherein said agent is selected from the group consisting of hydroxyapatite and zirconium phosphate.

19. The belting of claim 1 wherein said agent comprises a silver salt.

20. The belting of claim 19 wherein said silver salt is selected from the group consisting of silver acetate, silver benzoate, silver carbonate, silver iodate, silver iodide, silver lactate, silver laurate, silver nitrate, silver oxide, silver palmitate, silver protein, and silver sulfadiazine.

21. The belting of claim 19 wherein said silver salt is silver nitrate.

22. The belting of claim 1 wherein said agent comprises a zeolite containing ion-exchanged antimicrobial silver ions in an amount not exceeding 41% of the ion-exchange saturation capacity of the zeolite.

23. The belting of claim 16 wherein said antimicrobial metal is selected from the group consisting of silver, copper, zinc, and gold.

24. The belting of claim 16 wherein said antimicrobial metal is silver.

25. The belting of claim 9 wherein the polymeric material coating said web is polyvinyl chloride and the material of said cover is polyvinyl chloride.

## Patentansprüche

1. Flexibles Förderband, enthaltend ein anorganisches antimikrobielles Mittel, das mindestens ein Mittel umfasst, das aus der Gruppe ausgewählt ist, die aus antimikrobiellen Keramikteilchen und antimikrobiellen Metallsalzen besteht, **dadurch gekennzeichnet, dass**
die antimikrobiellen Keramikteilchen mindestens eine Teilchen-Spezies einschließen, die aus der Gruppe ausgewählt ist, die aus Zeolithen, die ionenausgetauschte antimikrobielle Metallionen in einer Menge unterhalb der Ionenaustausch-Sättigungskapazität des Zeoliths enthalten, Hydroxyapatit, Zirconiumphosphaten und anderen Ionenaustausch-Keramiken besteht.

2. Förderband nach Anspruch 1, umfassend eine Bandschicht aus einem Stoff, wobei die Bandschicht das anorganische antimikrobielle Mittel enthält.

3. Förderband nach Anspruch 2, bei dem der Stoff des Bandes mit einem polymeren Material gesättigt ist und das polymere Material das Mittel enthält.

4. Förderband nach Anspruch 3, bei dem das Mittel mit dem polymeren Material gemischt ist, welches den Bandstoff sättigt.

5. Förderband nach Anspruch 3, bei dem das Mittel auf das polymere Material aufgetragen ist.

6. Förderband nach Anspruch 2, bei dem der Stoff aus der Gruppe ausgewählt ist, die aus Baumwolle, Polyester, Nylon, Glasfaser, Polypropylen und Polyvinylchlorid besteht.

7. Förderband nach Anspruch 3, bei dem das polymere Material aus der Gruppe ausgewählt ist, die aus Polyurethan, Polyvinylchlorid, Siliconkautschuk, Latexkautschuk und anderen flexiblen Polymeren besteht.

8. Förderband nach Anspruch 7, bei dem der Stoff des Bandes aus der Gruppe ausgewählt ist, die aus Baumwolle, Polyester, Nylon, Glasfaser, Polypropylen und Polyvinylchlorid besteht.

9. Förderband nach Anspruch 2, weiter umfassend eine Schicht aus einem elastomeren Material, das an die Bandschicht angrenzt und diese überzieht.

10. Förderband nach Anspruch 9, bei dem die Überzugsschicht ein anorganisches antimikrobielles Mittel enthält.

11. Förderband nach Anspruch 10, bei dem das Mittel mit dem elastomeren Überzugsmaterial gemischt ist.

12. Förderband nach Anspruch 10, bei dem das Mittel auf das elastomere Überzugsmaterial aufgetragen ist.

13. Förderband nach Anspruch 4, bei dem das Material des Mittels etwa 0,5 - 20,0 Gew.-% der Mischung aus dem polymeren Material und dem Mittel umfasst.

14. Förderband nach Anspruch 13, bei dem das Mittel 0,5 - 10,0 Gew.-% der Mischung ausmacht.

15. Förderband nach Anspruch 14, bei dem das Mittel 1,0 - 8,0 Gew.-% der Mischung ausmacht.

16. Förderband nach Anspruch 1, bei dem das Mittel einen Zeolith umfasst, der ionenausgetauschte antimikrobielle Metallionen in einer Menge enthält, die 41% der Ionenaustausch-Sättigungskapazität des Zeoliths nicht überschreitet.

17. Förderband nach Anspruch 16, bei dem der Zeolith Ammoniumion in einer Menge enthält, die nicht 20 Gew.-%, bezogen auf das Gewicht des Zeoliths, überschreitet.

18. Förderband nach Anspruch 1, bei dem das Mittel aus der Gruppe ausgewählt ist, die aus Hydroxyapatit und Zirconiumphosphat besteht.

19. Förderband nach Anspruch 1, bei dem das Mittel ein Silbersalz umfasst.

20. Förderband nach Anspruch 19, bei dem das Silbersalz aus der Gruppe ausgewählt ist, die aus Silberacetat, Silberbenzoat, Silbercarbonat, Silberiodat, Silberiodid, Silberlactat, Silberlaurat, Silbernitrat, Silberoxid, Silberpalmitat, Silberprotein und Silbersulfadiazin besteht.

21. Förderband nach Anspruch 19, bei dem das Silbersalz Silbernitrat ist.

22. Förderband nach Anspruch 1, bei dem das Mittel einen Zeolith umfasst, der ionenausgetauschte antimikrobielle Silberionen in einer Menge enthält, die 41% der Ionenaustausch-Sättigungskapazität des Zeoliths nicht überschreitet.

23. Förderband nach Anspruch 16, bei dem das antimikrobielle Metall aus der Gruppe ausgewählt ist, die aus Silber, Kupfer, Zink und Gold besteht.

24. Förderband nach Anspruch 16, bei dem das antimikrobielle Metall Silber ist.

25. Förderband nach Anspruch 9, bei dem das polymere Material, welches das Band beschichtet, Polyvinylchlorid ist und das Material des Überzugs Polyvinylchlorid ist.

## Revendications

1. Courroie flexible contenant un agent antimicrobien minéral,
comprenant au moins un agent choisi dans le groupe constitué par des particules céramiques antimicrobiennes et des sels métalliques antimicrobiens ; **caractérisée en ce que** lesdites particules céramiques antimicrobiennes comprennent au moins une espèce de particule choisie dans le groupe constitué par les zéolites contenant des ions métalliques antimicrobiens à ions échangés en une quantité inférieure à la capacité de saturation d'échange d'ions de la zéolite, l'hydroxyapatite, les phosphates de zirconium et d'autres matériaux céramiques à ions échangés.

2. Courroie selon la revendication 1, comprenant une couche de toile d'un tissu, la couche de toile contenant ledit agent antimicrobien minéral.

3. Courroie selon la revendication 2, dans laquelle le tissu de la toile est saturé d'un matériau polymère et ledit matériau polymère contient ledit agent.

4. Courroie selon la revendication 3, dans laquelle ledit agent est mélangé dans le matériau polymère qui sature le tissu de toile.

5. Courroie selon la revendication 3, dans laquelle ledit agent est appliqué sur ledit matériau polymère.

6. Courroie selon la revendication 2, dans laquelle le tissu est choisi dans le groupe constitué par le coton, le polyester, le nylon, la fibre de verre, le polypropylène et le polychlorure de vinyle.

7. Courroie selon la revendication 3, dans laquelle ledit matériau polymère est choisi dans le groupe constitué par le polyuréthane, le polychlorure de vinyle, un caoutchouc de silicone, un caoutchouc de latex et d'autres polymères flexibles.

8. Courroie selon la revendication 7, dans laquelle le tissu de ladite toile est choisi dans le groupe constitué par le coton, le polyester, le nylon, la fibre de verre, le polypropylène et le polychlorure de vinyle.

9. Courroie selon la revendication 2, comprenant en outre une couche d'un matériau élastomère contigu avec ladite couche de toile et de revêtement de recouvrement de ladite couche de toile.

10. Courroie selon la revendication 9, dans laquelle ladite couche de revêtement de recouvrement contient un agent antimicrobien minéral.

11. Courroie selon la revendication 10, dans laquelle ledit agent est mélangé dans le matériau de revêtement de recouvrement élastomère.

12. Courroie selon la revendication 10, dans laquelle ledit agent est appliqué sur ledit matériau de revêtement de recouvrement élastomère.

13. Courroie selon la revendication 4, dans laquelle le matériau dudit agent comprend d'environ 0,5 à 20,0 % en poids du mélange dudit matériau polymère et dudit agent.

14. Courroie selon la revendication 13, dans laquelle ledit agent constitue de 0,5 à 10,0 % en poids du mélange.

15. Courroie selon la revendication 14, dans laquelle ledit agent constitue de 1,0 à 8,0 % en poids du mélange.

16. Courroie selon la revendication 1, dans laquelle ledit agent comprend une zéolite contenant des ions métalliques antimicrobiens à ions échangés en une quantité ne dépassant pas 41 % de la capacité de saturation d'échange d'ions de la zéolite.

17. Courroie selon la revendication 16, dans laquelle ladite zéolite contient un ion ammonium en une quantité ne dépassant pas 20 % en poids, par rapport au poids de la zéolite.

18. Courroie selon la revendication 1, dans laquelle ledit agent est choisi dans le groupe constitué par l'hydroxyapatite et le phosphate de zirconium.

19. Courroie selon la revendication 1, dans laquelle ledit agent comprend un sel d'argent.

20. Courroie selon la revendication 19, dans laquelle ledit sel d'argent est choisi dans le groupe constitué par l'acétate d'argent, le benzoate d'argent, le carbonate d'argent, l'iodate d'argent, l'iodure d'argent, le lactate d'argent, le laurate d'argent, le nitrate d'argent, l'oxyde d'argent, le palmitate d'argent, une protéine d'argent et une sulfadiazine d'argent.

21. Courroie selon la revendication 19, dans laquelle ledit sel d'argent est le nitrate d'argent.

22. Courroie selon la revendication 1, dans laquelle ledit agent comprend une zéolite contenant des ions argent antimicrobiens à ions échangés en une quantité ne dépassant pas 41 % de la capacité de saturation d'échange d'ions de la zéolite.

23. Courroie selon la revendication 16, dans laquelle ledit métal antimicrobien est choisi dans le groupe constitué par l'argent, le cuivre, le zinc et l'or.

24. Courroie selon la revendication 16, dans laquelle ledit métal antimicrobien est l'argent.

25. Courroie selon la revendication 9, dans laquelle le matériau polymère revêtant ladite toile est le polychlorure de vinyle et le matériau dudit recouvrement est le polychlorure de vinyle.
